# EUROPEAN PATENT APPLICATION

(11) **EP 4 671 006 A1**
(43) Date of publication of application: **31.12.2025**
(21) Application number: 24759632.3
(22) Date of filing: 19.02.2024
(51) Int. Cl.: B60H 1/00

(54) **HEATING, VENTILATION AND/OR AIR CONDITIONING DEVICE**

(30) Priority: 20.02.2023 CN 202310142150
(71) Applicant: Valeo Systemes Thermiques, 78320 Le Mesnil Saint Denis (FR)
(72) Inventor: LIN, Qinghua, Jingzhou, Hubei 434000 (CN); BAO, Tao, Jingzhou, Hubei 434000 (CN); LIU, Tingwei, Jingzhou, Hubei 434000 (CN)
(74) Representative: Valeo Powertrain Systems
(86) International application number: PCT/CN2024/077524
(87) International publication number: WO 2024/174955

(57) **Abstract**

A heating, ventilation and/or air conditioning device (10) for a vehicle, comprising: a housing (100) allowing airflow to pass through, the housing (100) having a first wall (110), a second wall (120), and a first intermediate wall (130), the first wall (110) and the first intermediate wall (130) defining a first channel port (P1) in the housing (100), and the second wall (120) and the first intermediate wall (130) defining a second channel port (P2) in the housing (100); and a first main damper (170), having a first position, a second position and an intermediate position between the first position and the second position in the housing (100). In the first position, the first main damper (170) closes the second channel port (P2) and opens the first channel port (P1). In the intermediate position, the first main damper (170) opens the first channel port (P1) and the second channel port (P2). In the second position, the first main damper (170) closes the first channel port (P1) and opens the second channel port (P2). The heating, ventilation and/or air conditioning device has a simplified and compact structure.

## Description

### Technical Field

The present application relates to the field of vehicle parts, in particular to a heating, ventilation and/or air conditioning device for a vehicle.

### Background Art

Existing heating, ventilation and/or air conditioning devices for vehicles can use internally circulated air or external fresh air for air and temperature regulation within the vehicle cabin. However, in the prior art, heating, ventilation and/or air conditioning devices have the disadvantages of being structurally complex and insufficiently compact, for the purpose of controlling and guiding airflow.

### Summary of the Invention

For this reason, the present invention proposes a heating, ventilation and/or air conditioning device for a vehicle, comprising:
a housing, configured to allow passage of an airflow, the housing having a first wall, a second wall and a first intermediate wall; the first wall and the first intermediate wall defining a first channel port in the housing; the second wall and the first intermediate wall defining a second channel port in the housing;
a first main flap, having a first position, a second position, and an intermediate position between the first position and the second position in the housing, wherein:
   at the first position, the first main flap closes the second channel port and opens the first channel port;
   at the intermediate position, the first main flap opens the first channel port and the second channel port;
   at the second position, the first main flap closes the first channel port and opens the second channel.

Thus, in the heating, ventilation and/or air conditioning device for a vehicle as proposed in the present disclosure, the configuration of the various walls and the first main flap in the housing enables the opening or closing of the first channel port and the second channel port to be controlled according to actual needs, so as to control whether airflow can pass through the first channel port and/or the second channel port, thus achieving control and guidance of airflow, and resulting in a heating, ventilation and/or air conditioning device with a compact structure and a multitude of functions which is more efficient and energy-saving.

The heating, ventilation and/or air conditioning device proposed in the present application may further comprise one or more of the following further developments.

In some embodiments, the first main flap has a first end and a second end, wherein: at the first position, the first end abuts the first intermediate wall, and the second end abuts the second wall, so that the first main flap closes the second channel port and opens the first channel port; at the intermediate position, the first end is located between the first wall and the first intermediate wall, and the second end is located between the second wall and the first intermediate wall, so that the first main flap opens the first channel port and the second channel port; at the second position, the first end abuts the first wall, and the second end abuts the first intermediate wall, so that the first main flap closes the first channel port and opens the second channel port.

In some embodiments, the first main flap is arranged in the housing in such a way as to be rotatable about a first rotation axis.

In some embodiments, the heating, ventilation and/or air conditioning device further comprises a heat exchange element; the heat exchange element is located in the housing; the first wall is used to divide an airflow passing through the heat exchange element into a first airflow and a second airflow, wherein: when the first main flap is at the first position, the first channel port allows the first airflow to pass through; when the first main flap is at the second position, the second channel port allows the first airflow to pass through.

In some embodiments, the first wall and the second wall define a third channel port in the housing; the third channel port allows the first airflow to pass through, wherein the third channel port is located upstream of the first channel port and the second channel port in the direction of flow of the first airflow.

In some embodiments, the first wall and the second wall both extend from a downstream surface of the heat exchange element in a direction away from the heat exchange element.

In some embodiments, the housing has a first outlet and a second outlet, wherein: when the first main flap is at the first position, the first airflow passing through the first channel port is guided by the first main flap to flow toward the first outlet; when the first main flap is at the intermediate position, the second outlet is closed, such that the first airflow passing through the first channel port flows toward the first outlet; when the first main flap is at the second position, the first airflow passing through the second channel port is guided by the first main flap to flow toward the second outlet.

In some embodiments, the heating, ventilation and/or air conditioning device further comprises a first mixing flap, the first mixing flap being arranged upstream of the heat exchange element, and used to generate a first bypass airflow that bypasses the heat exchange element.

In some embodiments, the heating, ventilation and/or air conditioning device further comprises an evaporator located upstream of the heat exchange element, and a first dividing wall is provided between the evaporator and the heat exchange element; the first dividing wall is used to divide a space between the evaporator and the heat exchange element; the first mixing flap is located at one side of the first dividing wall.

In some embodiments, the first outlet is a first front face-blowing outlet and/or a first defrosting outlet, and the second outlet is a rear face-blowing outlet and/or a rear feet-blowing outlet.

### Brief Description of the Drawings

In order to explain the technical solution of embodiments of the present disclosure more clearly, the drawings that need to be used in the embodiments will be briefly described below. It should be understood that the drawings below show only some embodiments of the present disclosure, so they should not be regarded as limiting the scope. Those skilled in the art could obtain other related drawings based on these drawings without inventive effort. In the drawings:
Fig. 1 shows a schematic top view of a heating, ventilation and/or air conditioning device for a vehicle according to an exemplary embodiment.
Fig. 2 shows a schematic sectional drawing, along line A-A, of the heating, ventilation and/or air conditioning device shown in Fig. 1, with the main flap in the first position.
Fig. 3 shows a schematic sectional drawing, along line A-A, of the heating, ventilation and/or air conditioning device shown in Fig. 1, with the main flap in the intermediate position.
Fig. 4 shows a schematic sectional drawing, along line A-A, of the heating, ventilation and/or air conditioning device shown in Fig. 1, with the main flap in the second position.
Fig. 5 shows a schematic sectional drawing, along line B-B, of the heating, ventilation and/or air conditioning device shown in Fig. 1, with the second main flap in the first flap position.
Fig. 6 shows a schematic sectional drawing, along line B-B, of the heating, ventilation and/or air conditioning device shown in Fig. 1, with the second main flap in the second flap position.
Fig. 7 shows a schematic sectional drawing, along line B-B, of the heating, ventilation and/or air conditioning device shown in Fig. 1, with the second main flap in the intermediate flap position.

### Detailed Description of the Invention

A heating, ventilation and air conditioning device according to embodiments of the present disclosure is described in detail below with reference to the drawings. In order to make the objectives, technical solutions and advantages of the present practical disclosure clearer, the technical solutions in the embodiments of the present disclosure will be clearly and completely described below in conjunction with the drawings in the embodiments of the present disclosure; obviously, the embodiments described are some, not all, of the embodiments of the present disclosure.

Thus, the detailed description below of embodiments of the present disclosure provided in conjunction with the drawings is not intended to limit the claimed scope of the present disclosure, and merely shows selected embodiments of the present disclosure. All other embodiments obtained by those skilled in the art on the basis of the embodiments in the present disclosure without inventive effort are included in the scope of protection of the present disclosure.

Unless otherwise defined in the context, the singular includes the plural. Throughout this specification, the terms "comprising", "having", etc. are used herein to specify the existence of the mentioned characteristic, number, step, operation, element, component or combination thereof, without ruling out the existence or addition of one or more other characteristics, numbers, steps, operations, elements, components or combinations thereof.

In addition, even though terms including ordinal numbers such as "first" and "second" can be used to describe various components, these components are not restricted by these terms, which are merely used to distinguish one element from another. For example, without departing from the scope of the present disclosure, a first component may be referred to as a second component and, similarly, a second component may be referred to as a first component.

In the description of the present invention, it is necessary to understand that the orientation or position relationship indicated by terms such as "up", "down", "left", "right", "inside", and "outside" is based on the orientation or position relationship shown in the drawings, or the orientation or position relationship of usual placement when the disclosed product is in use, or the orientation or position relationship that is commonly understood by those skilled in the art, and is only for the convenience of describing the present disclosure and simplifying the description, rather than indicating or implying that the device or element referred to must have a specific orientation or be constructed and operated in a specific orientation, so must not be construed as limiting the present disclosure.

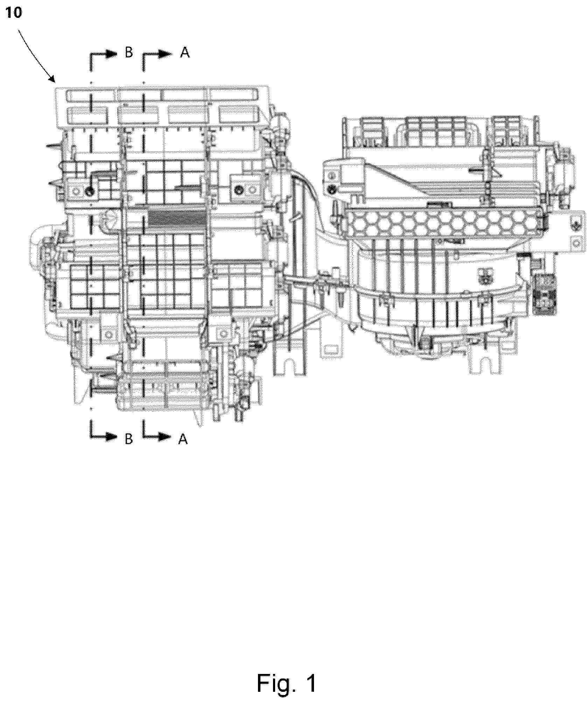

As shown in Figs. 1 - 7, a heating, ventilation and/or air conditioning device 10 proposed in the present invention may be used in a vehicle, e.g. a motor vehicle, an electric vehicle or a hybrid vehicle. The heating, ventilation and/or air conditioning device 10 comprises a housing 100 allowing an airflow to circulate, and various members arranged in the housing 100. The present invention is intended to enable, through the cooperation of the housing 100 and the various components, a desired airflow to flow through a corresponding airflow channel and reach a desired outlet at a desired flow rate or ratio according to actual needs, so as to meet a requirement of a driver and passengers in a cabin of the vehicle for control and regulation of air and temperature inside the vehicle cabin, and can at the same time save vehicle energy, especially energy supplied to the heating, ventilation and/or air conditioning device 10 - this is especially important in electric or hybrid vehicles.

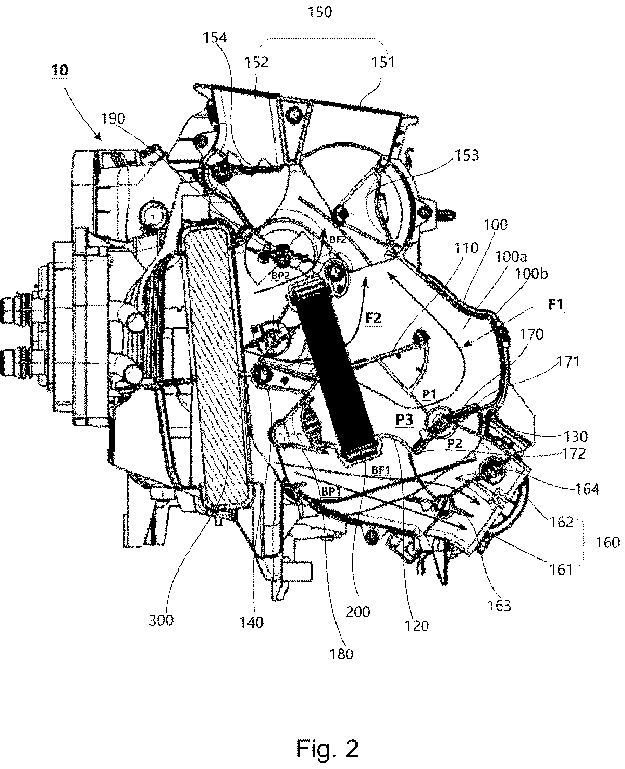

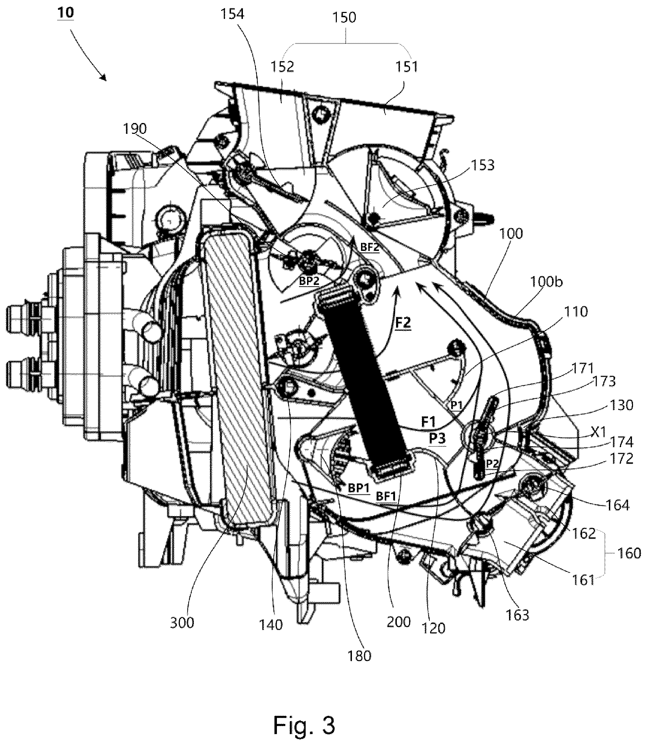

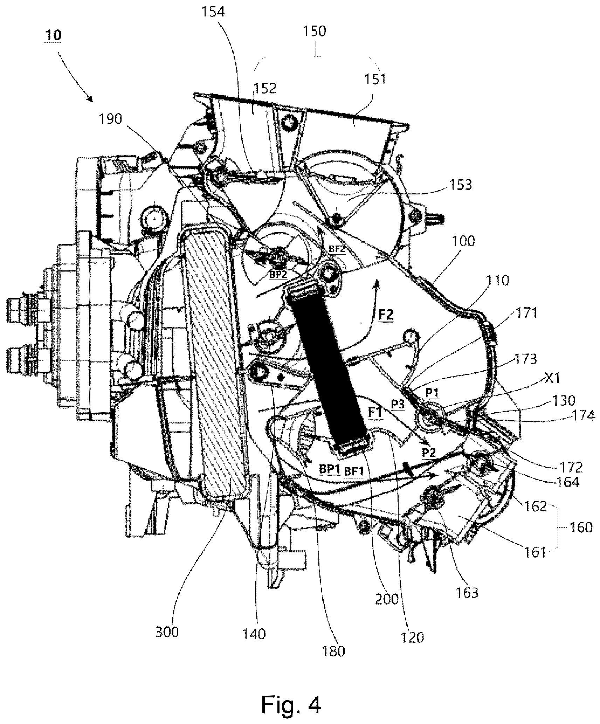

In an embodiment, as shown in Figs. 2 - 4, the housing 100 of the heating, ventilation and/or air conditioning device 10 proposed in the present invention may be provided with a first wall 110, a second wall 120 and a first intermediate wall 130. More specifically, the first wall 110, the second wall 120 and the first intermediate wall 130 are arranged on an inner wall of the housing 100, wherein the first wall 110 and the first intermediate wall 130 are configured to define a first channel port P1 in the housing 100, and the second wall 120 and the first intermediate wall 130 are configured to define a second channel port P2 in the housing 100. When the first channel port P1 or the second channel port P2 is open, an airflow can flow through the corresponding channel port; when the first channel port P1 or the second channel port P2 is closed, the airflow can no longer flow through the corresponding channel port. To control the opening and closing of the first channel port P1 and the second channel port P2, the heating, ventilation and/or air conditioning device 10 may be configured to further comprise a first main flap 170 located in the housing 100. The first main flap 170 is configured to be able to have a first position, a second position and an intermediate position in the housing 100, the intermediate position being located between the first position and the second position, wherein: at the first position, the first main flap 170 closes the second channel port P2 and opens the first channel port P1 (as shown in Fig. 2), i.e. at this time an airflow can pass through the first channel port P1 but not through the second channel port P2; at the intermediate position, the first main flap 170 opens the first channel port P1 and the second channel port P2 (as shown in Fig. 3), i.e. at this time airflows can simultaneously flow through the first channel port P1 and the second channel port P2; at the second position, the first main flap 170 closes the first channel port P1 and opens the second channel port P2 (as shown in Fig. 4), i.e. at this time an airflow can flow through the second channel port P2 but not through the first channel port P1. More specifically, the first main flap 170 is configured to be able to occupy multiple intermediate positions between the first position and the second position, and the degrees of opening of the first channel port P1 and the second channel port P2 are different at different intermediate positions, thus allowing the flow rates of air simultaneously flowing through the first channel port P1 and the second channel port P2 to be controlled according to actual needs.

It should be noted that the first wall 110, the second wall 120 and the first intermediate wall 130 may each be configured to be at least partially planar and/or curved, according to the space in the housing 100 and/or the structure of the first main flap 170; and the first wall 110, the second wall 120 and the first intermediate wall 130 may each be configured to comprise different parts. The specific forms shown in the figures of the present application are merely illustrative and non-exclusive; first walls, second walls and first intermediate walls in other forms that are able to realize the abovementioned cooperative relationship with the main flap are all included within the scope of protection of the present application.

Thus, in the heating, ventilation and/or air conditioning device 10 for a vehicle as proposed in the present disclosure, the configuration of the first wall 110, the second wall 120, the first intermediate wall 130 and the first main flap 170 in the housing 100 enables the opening or closing, and the degrees of opening, of the first channel port P1 and the second channel port P2 to be controlled using a simple and compact structure according to actual needs in such a way that the space occupied by the heating, ventilation and/or air conditioning device 10 is not increased, and it is thus possible to control whether an airflow is able to pass through the first channel port P1 and/or the second channel port P2, thus achieving effective division and guidance of airflow.

As shown in Figs. 2 - 4, in some embodiments, the first main flap 170 is constructed to have a first end 171 and a second end 172, so that: at the first position, the first end 171 of the first main flap 170 abuts the first intermediate wall 130, and the second end 172 of the first main flap 170 abuts the second wall 120, so that the first main flap 170 closes the second channel port P2 and opens the first channel port P1 (as shown in Fig. 2); at the intermediate position, the first end 171 of the first main flap 170 is located between the first wall 110 and the first intermediate wall 130, and the second end 172 of the first main flap 170 is located between the second wall 120 and the first intermediate wall 130, so that the first main flap 170 simultaneously opens the first channel port P1 and the second channel port P2 (as shown in Fig. 3); at the second position, the first end 171 of the first main flap 170 abuts the first wall 110, and the second end 172 of the first main flap 170 abuts the first intermediate wall 130, so that the first main flap 170 closes the first channel port P1 and opens the second channel port P2 (as shown in Fig. 4). This allows control of whether the first channel port P1 and the second channel port P2 are open or not, and the degrees of opening thereof, to be achieved by means of the first main flap 170 using a simple structure.

As shown in Figs. 2 - 4, in some embodiments, the first main flap 170 is arranged in the housing 100 of the heating, ventilation and/or air conditioning device 10 in such a way as to be rotatable about a first rotation axis X1. This allows an angular position of the first main flap 170 to be adjusted and controlled conveniently. More specifically, as shown in the figures, the first main flap 170 may comprise a middle portion arranged around the first rotation axis X, and a first valve flap 173 and a second valve flap 174 which extend radially outward from the middle portion and are arranged at an angle to each other. The first end 171 of the first main flap 170 may be a free end of the first valve flap 173, and the second end 172 of the first main flap 170 may be a free end of the second valve flap 174. Optionally, the first valve flap 173 and the second valve flap 174 are configured to rotate synchronously. Thus, by rotating the first main flap 170 about the first rotation axis X1, the angular position of the first main flap 170 can be adjusted, thereby allowing it to occupy the first position, the second position, or any intermediate position between the first position and the second position, as needed.

In a more specific embodiment, the housing 100 of the heating, ventilation and/or air conditioning device 10 may comprise a first housing plate 100a and a second housing plate (not shown) arranged opposite one another, and a first peripheral housing portion 100b extending between the first housing plate 100a and the second housing plate. In such an embodiment, the abovementioned first wall 110 and second wall 120 may be configured to extend between the first housing plate 100a and the second housing plate, and the first intermediate wall 130 may also be configured to extend between the first housing plate 100a and the second housing plate. Optionally, the first intermediate wall 130 may be integral with the first peripheral housing portion 100b of the housing 100. Furthermore, the first valve flap 173 and the second valve flap 174 of the first main flap 170 may also be configured to be between the first housing plate 100a and the second housing plate, so as to be able to effectively close the first channel port P1 or the second channel port P2 according to actual needs, and thereby achieve precise guidance and control of airflow. More specifically, as shown in the figures, the first intermediate wall 130 may comprise an upper end portion and a lower end portion, wherein, when the first main flap 170 is at the first position, the first end 171 of the first main flap 170 abuts the lower end portion of the first intermediate wall 130, and when the first main flap 170 is at the second position, the first end 171 of the first main flap 170 abuts the upper end portion of the first intermediate wall 130.

As shown in Figs. 2 - 4, in some embodiments, the heating, ventilation and/or air conditioning device 10 may also comprise a heat exchange element 200 located in the housing 100. In such an embodiment, the first wall 110 may be configured to divide an airflow passing through the heat exchange element 200 into a first airflow F1 and a second airflow F2, wherein: when the first main flap 170 is at the first position, the first channel port P1 allows the first airflow F1 to pass through but the second channel port P2 does not allow the first airflow F1 to pass through (as shown in Fig. 2); when the first main flap 170 is at the second position, the second channel port P2 allows the first airflow F1 to pass through but the first channel port P1 does not allow the first airflow F1 to pass through (as shown in Fig. 4). In addition, when the first main flap 170 is at any intermediate position, the first airflow F1 can simultaneously flow through the first channel port P1 and the second channel port P2; the flow rates of the first airflow through the first channel port P1 and the second channel port P2 are related to the respective degrees of opening of the first channel port P1 and the second channel port P2. In a specific embodiment, the heat exchange element 200 may be a heating element, and an airflow passing through the heat exchange element 200 is a heated airflow.

As shown in Figs. 2 - 4, in some embodiments, the first wall 110 and the second wall 120 may also be configured to define a third channel port P3 in the housing 100; the third channel port P3 allows the first airflow F1 from the heat exchange element 200 to pass through, and the third channel port P3 is located upstream of the first channel port P1 and the second channel port P2 in the direction of flow of the first airflow F1. In a more specific embodiment, the first wall 110 and the second wall 120 may be configured to both extend from a downstream surface of the heat exchange element 200 in a direction away from the heat exchange element 200. In such an embodiment, the third channel port P3 is defined between the first wall 110 and the second wall 120. More specifically, the first wall 110 may extend from a middle portion of the downstream surface of the heat exchange element 200 in a direction away from the heat exchange element 200, and the second wall 120 may extend from an end edge of the downstream surface of the heat exchange element 200 in a direction away from the heat exchange element 200, so that the first airflow F1 from the heat exchange element 200 flows away from the heat exchange element 200 entirely via the third channel port P3.

As shown in Figs. 2 - 4, in some embodiments, the housing 100 of the heating, ventilation and/or air conditioning device 10 may be configured to have a first outlet 150 and a second outlet 160, i.e. airflow in the housing 100 can flow out through the first outlet 150 and/or the second outlet 160, and for example arrive in a corresponding region inside the vehicle cabin, after regulation in the heating, ventilation and/or air conditioning device 10. In such an embodiment, at least the following configuration is possible: when the first main flap 170 is at the first position, the first airflow F1 passing through the first channel port P1 flows toward the first outlet 150; when the first main flap 170 is at the second position, the first airflow F1 passing through the second channel port P2 flows toward the second outlet 160; when the first main flap 170 is at the intermediate position, the second outlet 160 may be closed, such that the first airflow F1 passing through the first channel port P1 also flows toward the first outlet 150. Of course, depending on actual needs, when the first main flap 170 is at the intermediate position, the second outlet 160 may also be at least partially open, to allow the first airflow F1 to also flow toward the second outlet 160. Thus, the heating, ventilation and/or air conditioning device 10 proposed in the present application can allow independent regulation and control of airflows to the first outlet 150 and to the second outlet 160.

Optionally, the first outlet 150 is a first front face-blowing outlet 151 and/or a first defrosting outlet 152; further optionally, the second outlet 160 is a rear face-blowing outlet 161 and/or a rear feet-blowing outlet 162. It should be noted that the terms "front" and "rear" used here respectively refer to at least one of the front seats and at least one of the rear seats inside the vehicle cabin. Optionally, the housing 100 of the heating, ventilation and/or air conditioning device 10 may also contain a first front face-blowing flap 153 for controlling the opening or closing of the first front face-blowing outlet 151 and the degree of opening thereof, and/or a first defrosting flap 154 for controlling the opening or closing of the first defrosting outlet 152 and the degree of opening thereof; more specifically, the first front face-blowing flap 153 is located on a fluid path from the first channel port P1 to the first front face-blowing outlet 151, and/or the first defrosting flap 154 is located on a fluid path from the first channel port P1 to the first defrosting outlet 152. Further optionally, the housing 100 of the heating, ventilation and/or air conditioning device 10 may also contain a rear face-blowing flap 163 for controlling the opening or closing of the rear face-blowing outlet 161 and the degree of opening thereof, and/or a rear feet-blowing flap 164 for controlling the opening or closing of the rear feet-blowing outlet 162 and the degree of opening thereof; more specifically, the rear face-blowing flap 163 is located on a fluid path from the second channel port P2 to the rear face-blowing outlet 161, and/or the rear feet-blowing flap 164 is located on a fluid path from the second channel port P2 to the rear feet-blowing outlet 162. Thus, the flow and flow rate of airflow can be controlled through the combined use of the various flaps.

More specifically, the first wall 110 may be regarded as dividing a housing interior space downstream of the heat exchange element 200 into a first space and a second space; the first airflow F1 from the heat exchange element 100 directly enters the first space, and the second airflow F2 from the heat exchange element 200 directly enters the second space. In this case, the first outlet 150 may be regarded as being arranged at the most downstream point of the second space, and the second outlet 160 may be regarded as being arranged at the most downstream point of the first space. In addition, in this case, the second wall 120 may be arranged in the first space, and extend from an end edge of the downstream surface of the heat exchange element 200.

As shown in Figs. 2 - 4, in some embodiments, the heating, ventilation and/or air conditioning device 10 may also comprise a first mixing flap 180 arranged inside the housing 100; the first mixing flap 180 may be arranged upstream of the heat exchange element 200, and is configured to be able to generate a first bypass airflow BF1 that bypasses the heat exchange element 200, i.e. the first bypass airflow BF1 will not pass through the heat exchange element 200, and instead will reach a region downstream of the heat exchange element 200 directly. This allows airflows at different temperatures to the used, so as to meet various temperature demands inside the vehicle cabin. More specifically, the housing 100 of the heating, ventilation and/or air conditioning device 10 may comprise a first bypass airflow channel port BP1 defined between a first end edge of the heat exchange element 200 and the housing 100, the first mixing flap 180 being configured to be able to control the opening or closing of the first bypass airflow channel port BP1 and the degree of opening thereof, and thus being able to control the amount of the first bypass airflow BF1 flowing through the first bypass airflow channel port BP1. For example, the first mixing flap 180 is configured to be able to be at a first limit position, a second limit position, and multiple intermediate bypass positions between the first limit position and the second limit position, wherein, at the first limit position, as shown in Fig. 2, the first bypass airflow channel port BP1 is fully open to allow the maximum amount of first bypass airflow BF1 to be generated; at the second limit position (not shown), the first bypass airflow channel port BP1 is fully closed so as to no longer generate the first bypass airflow BF1; at different intermediate bypass positions, the first bypass airflow channel port BP1 is open to different degrees to allow the desired amount of first bypass airflow BF1 to be generated according to actual needs. Thus, the configuration of the first mixing flap 180 and the first bypass airflow channel port BP1 allows the amount of the first bypass airflow BF1 reaching the downstream region to be controlled, thus allowing the temperature of downstream airflow to be regulated within a wide range. In a specific embodiment, the first mixing flap 180 may be a sliding flap or a butterfly flap.

As shown in Figs. 2 - 4, in some embodiments, the heating, ventilation and/or air conditioning device 10 further comprises an evaporator 300 located upstream of the heat exchange element 200, and a first dividing wall 140 is provided between the evaporator 300 and the heat exchange element 200, the first dividing wall 140 being configured to divide a space between the evaporator 300 and the heat exchange element 200. In such an embodiment, the first mixing flap 180 may be located at one side of the first dividing wall 140. In a more specific embodiment, the first dividing wall 140 is configured to divide the space between the evaporator 300 and the heat exchange element 200 into a third space and a fourth space, wherein an airflow entering the heat exchange element 200 from the third space becomes the first airflow F1, an airflow entering the heat exchange element 200 from the fourth space becomes the second airflow F2, and the first mixing flap 180 is located in the third space.

Optionally, the heating, ventilation and/or air conditioning device 10 may further comprise a second mixing flap 190 located in the fourth space, the second mixing flap 190 being likewise configured to generate a second bypass airflow BF2 or an adjustable amount of a second bypass airflow BF2, so as to realize more diverse regulation modes. More specifically, the housing 100 of the heating, ventilation and/or air conditioning device 10 may comprise a second bypass airflow channel port BP2 defined between the housing 100 and a second end edge opposite the first end edge of the heat exchange element 200, more specifically an end edge located in the second space; the second mixing flap 190 is configured to be able to control the opening or closing of the second bypass airflow channel port BP2 and the degree of opening thereof.

Various operating modes of the heating, ventilation and/or air conditioning device 10 when the first main flap 170 is respectively located at the first position, the intermediate position and the second position are described below.

### (A) First main flap 170 at first position, i.e. first main flap 170 opening first channel port P1 and closing second channel port P2

As shown in Fig. 2, at this time, airflow can flow through the first channel port P1 but not through the second channel port P2, so the first airflow F1 from the heat exchange element 200 is prevented from flowing through the second channel port P2 and thereby reaching a region downstream of the second channel port P2, and at the same time, the first bypass airflow BF1 bypassing the heat exchange element 200 is allowed to flow toward the second outlet 160; more specifically, the first bypass airflow BF1 bypassing the heat exchange element 200 is enabled to flow to a region downstream of the second channel port P2, more specifically to the rear face-blowing outlet 161.

In the case where the first outlet 150 comprises the first front face-blowing outlet 151 and the first defrosting outlet 152, a defrosting mode, a front face-blowing mode or a front face-blowing and defrosting mode may be selected, illustratively comprising the following:
When the defrosting mode is selected, the first front face-blowing flap 153 may be located at a position that fully closes the first front face-blowing outlet 151, and the first defrosting flap 154 may be located at a position that fully or partly opens the first defrosting outlet 152, such that an airflow passing through the heat exchange element 200 can flow in its entirety toward the first defrosting outlet 152 under the blocking and guiding action of the first main flap 170. More specifically, in the defrosting mode, the second mixing flap 190 of the heating, ventilation and/or air conditioning device 10 may be at a position that fully closes the second bypass airflow channel port BP2, such that no second bypass airflow BF2 reaches the first defrosting outlet 152. In this way, it can be ensured that defrosting is accomplished within a short time.

When the front face-blowing mode is selected, the first defrosting flap 154 may be located at a position that fully closes the first defrosting outlet 152, and the first front face-blowing flap 153 may be located at a position that fully or partly opens the first front face-blowing outlet 151, such that an airflow passing through the heat exchange element 200 and/or the second bypass airflow BF2 passing through the second bypass airflow channel port BP2 can flow in its entirety toward the first front face-blowing outlet 151 under the blocking and guiding action of the first main flap 170.

When the front face-blowing and defrosting mode is selected, the first defrosting flap 154 may be located at a position that fully or partly opens the first defrosting outlet 152, and the first front face-blowing flap 153 may be located at a position that fully or partly opens the first front face-blowing outlet 151, such that an airflow passing through the heat exchange element 200 and/or the second bypass airflow BF2 passing through the second bypass airflow channel port BP2 can flow toward the first defrosting outlet 152 and the first front face-blowing outlet 151 simultaneously under the blocking and guiding action of the first main flap 170.

In the case where the second outlet 160 comprises the rear face-blowing outlet 161 and the rear feet-blowing outlet 162, the position of the first mixing flap 180 can be adjusted according to actual needs so that it is at a position that fully opens or partly opens the first bypass airflow channel port BP1, and the position of the rear face-blowing flap 163 and/or the rear feet-blowing flap 164 can also be adjusted, so that an all-cold rear face-blowing mode or an all-cold rear feet-blowing mode or an all-cold rear face-blowing and feet-blowing mode can be selected. Of course, at this time, the first mixing flap 180, the rear face-blowing flap 163 and the rear feet-blowing flap 164 could also be at closed positions, so that no airflow is able to reach the rear face-blowing outlet and the rear feet-blowing outlet; this is preferred especially in the case where there are no passengers in the rear of the vehicle cabin or the passengers do not require air conditioning, so that all of the airflow can be delivered to the front of the vehicle cabin.

### (B) First main flap 170 at intermediate position, i.e. first main flap 170 opening first channel port P1 and second channel port P2 simultaneously

As shown in Fig. 3, at this time, airflow can flow through the first channel port P1 and the second channel port P2 simultaneously.

In the case where the first outlet 150 comprises the first front face-blowing outlet 151 and the first defrosting outlet 152, and the second outlet 160 comprises the rear face-blowing outlet 161 and the rear feet-blowing outlet 162, various modes can be selected, illustratively comprising the following:
When the rear face-blowing flap 163 and the rear feet-blowing flap 164 are correspondingly located at positions that close the rear face-blowing outlet 161 and the rear feet-blowing outlet 162, the maximum airflow volume can be delivered to the front seats. The defrosting mode, front face-blowing mode or front face-blowing and defrosting mode can be selected at this time. More specifically, at this time, the position of the first mixing flap 180 and/or the second mixing flap 190 and/or the first defrosting flap 154 and/or the first front face-blowing flap 153 can be adjusted and controlled as needed, so as to select a desired mode and various airflow volumes in this mode; and consequently, a desired temperature can be selected.

Conversely, when the first defrosting flap 154 and the first front face-blowing flap 153 are correspondingly located at positions that close the first defrosting outlet 152 and the first front face-blowing outlet 151, the maximum airflow volume can be delivered to the rear seats. A rear feet-blowing mode, a rear face-blowing mode or a rear face-blowing and feet-blowing mode can be selected at this time. More specifically, at this time, the position of the first mixing flap 180 and/or the second mixing flap 190 and/or the rear face-blowing flap 163 and/or the rear feet-blowing flap 164 can be adjusted and controlled as needed, so as to select a desired mode and various airflow volumes in this mode; and consequently, a desired temperature can be selected.

In addition, one or both of the first defrosting flap 154 and the first front face-blowing flap 153 may also be set to correspondingly be at a position that opens one or both of the first defrosting outlet 152 and the first front face-blowing outlet 151, while one or both of the rear face-blowing flap 163 and the rear feet-blowing flap 164 may be set to correspondingly be at a position that opens one or both of the rear face-blowing outlet 161 and the rear feet-blowing outlet 162; at this time, the position of the first mixing flap 180 and/or the second mixing flap 190 and/or the rear face-blowing flap 163 and/or the rear feet-blowing flap 164 can be adjusted and controlled as needed, so as to select a desired mode and various airflow volumes in this mode; and consequently, a desired temperature can be selected.

### (C) First main flap 170 at second position, i.e. first main flap 170 closing first channel port P1 and opening second channel port P2

As shown in Fig. 4, at this time, airflow can flow through the second channel port P2 but not through the first channel port P1.

In the case where the first outlet 150 comprises the first front face-blowing outlet 151 and the first defrosting outlet 152, and the second outlet 160 comprises the rear face-blowing outlet 161 and the rear feet-blowing outlet 162, the amounts and temperatures of airflows flowing toward the first outlet 150 and the second outlet 160 can be regulated and controlled independently of each other.

In this case, the second mixing flap 190 may be closed, so that only the second airflow F2 passing through the heat exchange element 200 is able to reach the first outlet 150. At this time, the required mode and airflow volume can be selected according to the positions and states of the first front face-blowing flap 153 and the first defrosting flap 154.

In addition, the second mixing flap 190 could also be fully or partly opened, thereby allowing the second bypass airflow BF2 and the second airflow F2 passing through the heat exchange element 200 to both reach the first outlet 150. At this time, the required mode and airflow volume can be selected according to the positions and states of the first front face-blowing flap 153 and the first defrosting flap 154.

In this case, the first mixing flap 180 may be closed, so as to select a rear seat all-heating mode, i.e. a rear face-blowing all-heating mode or a rear feet-blowing all-heating mode or a rear face-blowing and feet-blowing all-heating mode; at this time, only the first airflow F1 passing through the heat exchange element 200 is able to reach the second outlet 160. Also, at this time, a desired mode and airflow volume can be selected by adjusting the positions or states of the rear face-blowing flap 163 and the rear feet-blowing flap 164.

In addition, the first mixing flap 180 could also be opened, thereby allowing the first bypass airflow BF1 and the first airflow F1 passing through the heat exchange element 200 to both reach the second outlet 160. At this time, a desired mode and airflow volume can be selected by adjusting the positions or states of the first mixing flap 180 and the rear face-blowing flap 163 and the rear feet-blowing flap 164.

In an embodiment, as shown in Figs. 4 - 7, the housing 100 of the heating, ventilation and/or air conditioning device 10 proposed in the present invention may also be provided with a third wall 410, a fourth wall 420 and a second intermediate wall 430. More specifically, the third wall 410, the fourth wall 420 and the second intermediate wall 430 are arranged on an inner wall of the housing 100, wherein the third wall 410 and the second intermediate wall 130 are configured to define a fourth channel port P4 in the housing 100, and the fourth wall 420 and the second intermediate wall 430 are configured to define a fifth channel port P5 in the housing 100. When the fourth channel port P4 or the fifth channel port P5 is open, an airflow can flow through the corresponding channel port; when the fourth channel port P4 or the fifth channel port P5 is closed, the airflow can no longer flow through the corresponding channel port. To control the degree of opening of the fourth channel port P4 and the fifth channel port P5, the heating, ventilation and/or air conditioning device 10 may be configured to further comprise a second main flap 470 located in the housing 100. The second main flap 470 is configured to be able to have a first flap position, a second flap position and an intermediate flap position in the housing 100, the intermediate flap position being located between the first flap position and the second flap position, wherein: at the first flap position, the second main flap 470 closes the fourth channel port P4 and opens the fifth channel port P5, i.e. at this time an airflow can pass through the fifth channel port P5 but not through the fourth channel port P4; at the intermediate flap position, the second main flap 470 opens the fourth channel port P4 and the fifth channel port P5, i.e. at this time airflows can simultaneously flow through the fourth channel port P4 and the fifth channel port P5; at the second flap position, the second main flap 470 opens the fourth channel port P4 and closes the fifth channel port P5, i.e. at this time an airflow can flow through the fourth channel port P4 but not through the fifth channel port P5. More specifically, the second main flap 470 is configured to be able to occupy multiple intermediate flap positions between the first flap position and the second flap position, and the degrees of opening of the fourth channel port P4 and the fifth channel port P5 are different at different intermediate flap positions, thus allowing the flow rates of air simultaneously flowing through the fourth channel port P4 and the fifth channel port P5 to be controlled according to actual needs.

It should be noted that the third wall 410, the fourth wall 420 and the second intermediate wall 430 may each be configured to be at least partially planar and/or curved, according to the space in the housing 100 and/or the structure of the second main flap 470; and the third wall 410, the fourth wall 420 and the second intermediate wall 430 may each be configured to comprise different parts. The specific forms shown in the figures of the present application are merely illustrative and non-exclusive; third walls, fourth walls and second intermediate walls in other forms that are able to realize the abovementioned cooperative relationship with the second main flap 470 are all included within the scope of protection of the present application.

Thus, in the heating, ventilation and/or air conditioning device 10 for a vehicle as proposed in the present disclosure, the configuration of the third wall 410, the fourth wall 420, the second intermediate wall 430 and the second main flap 470 in the housing 100 enables the opening or closing, and the degrees of opening, of the fourth channel port P4 and the fifth channel port P5 to be controlled using a simple and compact structure according to actual needs in such a way that the space occupied by the heating, ventilation and/or air conditioning device 10 is not increased, and it is thus possible to control whether an airflow is able to pass through the fourth channel port P4 and/or the fifth channel port P5, thus achieving effective division and guidance of airflow.

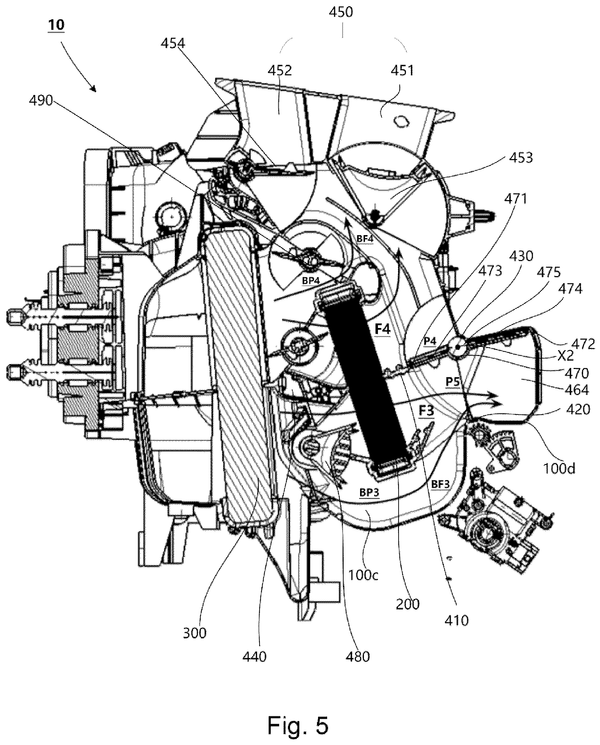

As shown in Figs. 5 - 7, in some embodiments, the second main flap 470 is constructed to have a first abutting end 471, a second abutting end 472, and a middle part 475 located between the first abutting end 471 and the second abutting end 472, the middle part 475 being arranged on the second intermediate wall 430, so that: at the first flap position, the first abutting end 471 of the second main flap 470 abuts the third wall 410, but the second abutting end 472 does not abut the fourth wall 420, so that the second main flap 470 closes the fourth channel port P4 and opens the fifth channel port P5 (as shown in Fig. 5); at the intermediate flap position, the first abutting end 471 of the second main flap 470 is located between the third wall 410 and the second intermediate wall 430, and the second abutting end 472 of the second main flap 470 is located between the fourth wall 420 and the second intermediate wall 430, so that the second main flap 470 simultaneously opens the fourth channel port P4 and the fifth channel port P5; in the second flap position, the second abutting end 472 of the second main flap 470 abuts the fourth wall 420, but the first abutting end 471 of the second main flap 470 does not abut the third wall 410, so that the second main flap 470 opens the fourth channel port P4 and closes the fifth channel port P5. This allows control of whether the fourth channel port P4 and the fifth channel port P5 are open or not, and the degrees of opening thereof, to be achieved by means of the second main flap 470 using a simple structure. More specifically, when the second main flap 470 is at the first flap position, the second abutting end 472 thereof abuts a portion of a side wall of the housing 100 that defines the fifth channel port P5, so as to allow full opening of the fifth channel port P5. Similarly, when the second main flap 470 is at the second flap position, the first abutting end 471 thereof abuts a portion of a side wall of the housing 100 that defines the fourth channel port P4, so as to allow full opening of the fourth channel port P4.

As shown in Figs. 5 - 7, in some embodiments, the second main flap 470 is arranged in the housing 100 of the heating, ventilation and/or air conditioning device 10 in such a way as to be rotatable about a second rotation axis X2. This allows an angular position of the second main flap 470 to be adjusted and controlled conveniently. More specifically, as shown in the figures, the middle part 475 of the second main flap 470 may be arranged around the second rotation axis X2, and the second main flap 470 comprises a third valve flap 473 and a fourth valve flap 474 which extend radially outward from the middle part 475 and are arranged at an angle to each other. The first abutting end 471 of the second main flap 470 may be a free end of the third valve flap 473, and the second abutting end 472 of the second main flap 470 may be a free end of the fourth valve flap 474. Optionally, the third valve flap 473 and the fourth valve flap 474 are configured to rotate synchronously. Thus, by rotating the second main flap 470 about the second rotation axis X2, the angular position of the second main flap 470 can be adjusted, thereby allowing it to occupy the first flap position, the second flap position, or any intermediate flap position between the first flap position and the second flap position, as needed.

In a more specific embodiment, the housing 100 of the heating, ventilation and/or air conditioning device 10 may comprise a third housing plate 100c and a fourth housing plate (not shown) arranged opposite one another, and a second peripheral housing portion 100d extending between the third housing plate 100c and the fourth housing plate. In such an embodiment, the abovementioned third wall 410, fourth wall 420 and second intermediate wall 430 may be configured to extend between the third housing plate 100c and the fourth housing plate. Optionally, the second intermediate wall 430 and the fourth wall 420 may be integral with the second peripheral housing portion 100d of the housing 100. Furthermore, the third valve flap 473 and the fourth valve flap 474 of the second main flap 470 may also be configured to be between the third housing plate 100c and the fourth housing plate, so as to be able to effectively close the fourth channel port P4 or the fifth channel port P5 according to actual needs, and thereby achieve precise guidance and control of airflow.

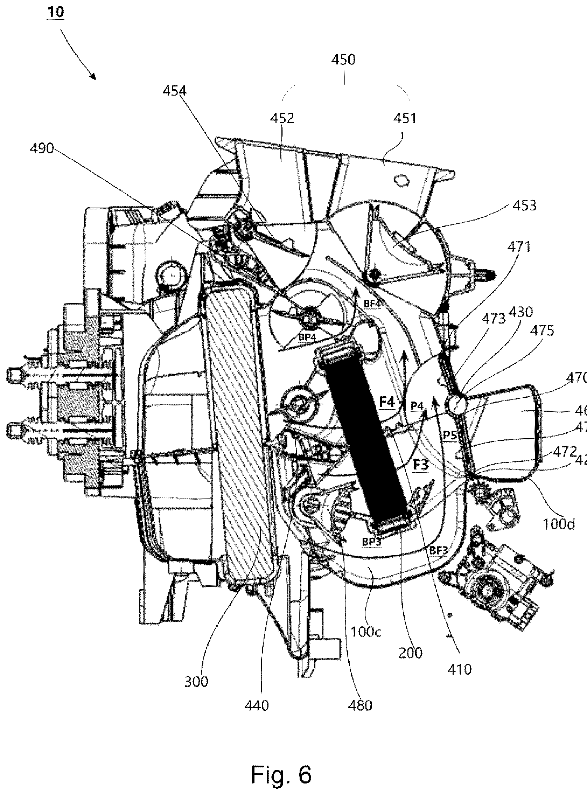

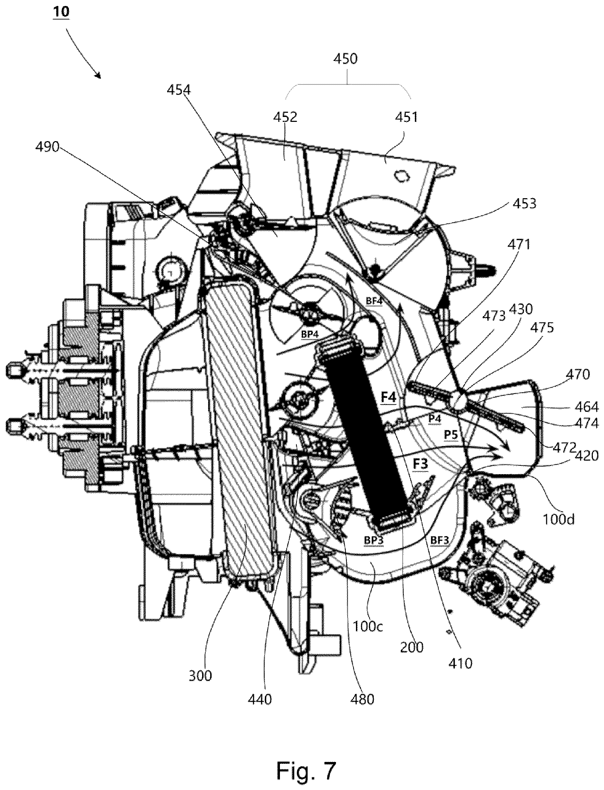

As shown in Figs. 5 - 7, in some embodiments, the heating, ventilation and/or air conditioning device 10 may also comprise a heat exchange element 200 located in the housing 100. In such an embodiment, the third wall 410 may be configured to divide an airflow passing through the heat exchange element 200 into a third airflow F3 and a fourth airflow F4, wherein: when the second main flap 470 is at the first flap position, the fifth channel port P5 allows the third airflow F3 to pass through but the fourth channel port P4 does not allow the third airflow F3 and the fourth airflow F4 to pass through (as shown in Fig. 5); when the second main flap 470 is at the second flap position, the fourth channel port P4 allows the third airflow F3 to pass through but the fifth channel port P5 does not allow the third airflow F3 and the fourth airflow F4 to pass through (as shown in Fig. 6). In addition, when the second main flap 470 is at the intermediate flap position, the fourth airflow F4 can simultaneously flow through the fourth channel port P4 and the fifth channel port P5, and the third airflow F3 can at least flow through the fifth channel port P5 (as shown in Fig. 7). In a specific embodiment, the heat exchange element 200 may be a heating element, and an airflow passing through the heat exchange element 200 is a heated airflow. In a more specific embodiment, the third wall 410 may be configured to extend from a downstream surface of the heat exchange element 200 in a direction away from the heat exchange element 200. More specifically, the third wall 410 may extend from a middle portion of the downstream surface of the heat exchange element 200 in a direction away from the heat exchange element 200.

As shown in Figs. 5 - 7, in some embodiments, the housing 100 of the heating, ventilation and/or air conditioning device 10 may be configured to have a front feet-blowing outlet 464, so that an airflow in the housing 100 can reach the feet of a front-seat passenger and/or the driver inside the vehicle cabin through the front feet-blowing outlet 464 after regulation in the heating, ventilation and/or air conditioning device 10. In such an embodiment, the front feet-blowing outlet 464 may be configured to be able to be in fluid communication with the fifth channel port P5, so that opening and closing the fifth channel port P5 also correspondingly opens and closes the front feet-blowing outlet 464, and the degree of opening of the fifth channel port P5 corresponds to the degree of opening of the front feet-blowing outlet 464. That is, in such an embodiment, there is no need to separately provide a flap for controlling the opening and closing of the front feet-blowing outlet 464 and the degree of opening thereof. Further, the housing 100 of the heating, ventilation and/or air conditioning device 10 may be configured to have a third outlet 450, i.e. airflow in the housing 100 can flow out through the third outlet 450, and for example arrive in a corresponding region inside the vehicle cabin, after regulation in the heating, ventilation and/or air conditioning device 10.

In such an embodiment, the following configuration is possible: when the second main flap 470 is at the first flap position, as shown in Fig. 5, the third airflow F3 is guided by the second main flap 470 to flow toward the front feet-blowing outlet 464 through the fifth channel port P5, neither the third airflow F3 nor the fourth airflow F4 is able to flow through the fourth channel port P4, and more specifically, the fourth airflow F4 can flow toward the third outlet 450; when the second main flap 470 is at the second flap position, as shown in Fig. 6, the third airflow F3 is guided by the second main flap 470 to flow toward the third outlet 450 through the fourth channel port P4, neither the third airflow F3 nor the fourth airflow F4 is able to flow through the fifth channel port P5, and more specifically, the fourth airflow F4 can also flow toward the third outlet 450; when the second main flap 470 is at the intermediate flap position, as shown in Fig. 7, the third airflow F3 is guided by the second main flap 470 to flow toward the front feet-blowing outlet 464 through the fifth channel port P5, one portion of the fourth airflow F4 can also be guided by the second main flap 470 to flow toward the front feet-blowing outlet 464 through the fourth channel port P4 and the fifth channel port P5, and more specifically, another portion of the fourth airflow F4 can flow toward the third outlet 450. Thus, the heating, ventilation and/or air conditioning device 10 proposed in the present application can allow independent regulation and control of airflows to the third outlet 450 and to the front feet-blowing outlet 464.

Optionally, the third outlet 450 is a second front face-blowing outlet 451 and/or a second defrosting outlet 452. It should be noted that the term "front" used here refers to at least one of the front seats inside the vehicle cabin. Optionally, the housing 100 of the heating, ventilation and/or air conditioning device 10 may also contain a second front face-blowing flap 453 for controlling the opening or closing of the second front face-blowing outlet 451 and the degree of opening thereof, and/or a second defrosting flap 454 for controlling the opening or closing of the second defrosting outlet 452 and the degree of opening thereof; more specifically, the second front face-blowing flap 453 is located on a fluid path from the fourth channel port P4 to the second front face-blowing outlet 451, and/or the second defrosting flap 454 is located on a fluid path from the fourth channel port P4 to the second defrosting outlet 452. Thus, the flow and flow rate of airflow can be controlled through the combined use of the various flaps.

More specifically, the third wall 410 may be regarded as dividing a housing interior space downstream of the heat exchange element 200 into a fifth space and a sixth space; the third airflow F3 from the heat exchange element 100 directly enters the fifth space, and the fourth airflow F4 from the heat exchange element 200 directly enters the sixth space. In this case, the third outlet 450 may be regarded as being arranged at the most downstream point of the sixth space, and the front feet-blowing outlet 464 may be regarded as being arranged at the most downstream point of the fifth space.

As shown in Figs. 5 - 7, in some embodiments, the heating, ventilation and/or air conditioning device 10 may also comprise a third mixing flap 480 arranged inside the housing 100; the third mixing flap 480 may be arranged upstream of the heat exchange element 200, and is configured to be able to generate a third bypass airflow BF3 that bypasses the heat exchange element 200, i.e. the third bypass airflow BF3 will not pass through the heat exchange element 200, and instead will reach a region downstream of the heat exchange element 200 directly. This allows airflows at different temperatures to the used, so as to meet various temperature demands inside the vehicle cabin. More specifically, the housing 100 of the heating, ventilation and/or air conditioning device 10 may comprise a third bypass airflow channel port BP3 defined between a first end edge of the heat exchange element 200 and the housing 100, the third mixing flap 480 being configured to be able to control the opening or closing of the third bypass airflow channel port BP3 and the degree of opening thereof, and thus being able to control the amount of the third bypass airflow BF3 flowing through the third bypass airflow channel port BP3. For example, the third mixing flap 480 is configured to be able to be at a first limit position, a second limit position, and multiple intermediate bypass positions between the first limit position and the second limit position, wherein, at the first limit position (not shown), the third bypass airflow channel port BP3 is fully open to allow the maximum amount of third bypass airflow BF3 to be generated; at the second limit position (not shown), the third bypass airflow channel port BP3 is fully closed so as to no longer generate the third bypass airflow BF3; at different intermediate bypass positions, the third bypass airflow channel port BP3 is open to different degrees to allow the desired amount of third bypass airflow BF3 to be generated according to actual needs. Thus, the configuration of the third mixing flap 480 and the third bypass airflow channel port BP3 allows the amount of the third bypass airflow BF3 reaching the downstream region to be controlled, thus allowing the temperature of downstream airflow to be regulated within a wide range. In a specific embodiment, the third mixing flap 480 may be a sliding flap or a butterfly flap.

As shown in Figs. 2 - 4, in some embodiments, the heating, ventilation and/or air conditioning device 10 further comprises an evaporator 300 located upstream of the heat exchange element 200, and a second dividing wall 440 is provided between the evaporator 300 and the heat exchange element 200, the second dividing wall 440 being configured to divide a space between the evaporator 300 and the heat exchange element 200. In such an embodiment, the third mixing flap 180 may be located at one side of the second dividing wall 440. In a more specific embodiment, the second dividing wall 440 is configured to divide the space between the evaporator 300 and the heat exchange element 200 into a seventh space and an eighth space, wherein an airflow entering the heat exchange element 200 from the seventh space becomes the third airflow F3, an airflow entering the heat exchange element 200 from the eighth space becomes the fourth airflow F4, and the third mixing flap 480 is located in the seventh space.

More specifically, the third mixing flap 480 may also be configured such that: at the first limit position, the third mixing flap 480 blocks airflow in the seventh space from entering the heat exchange element 200, so the third airflow F3 cannot be generated; at the second limit position, the amount of airflow allowed to enter the heat exchange element 200 from the seventh space is largest, i.e. the maximum amount of third airflow F3 is allowed to be generated; at the intermediate bypass position, a portion of the airflow in the seventh space is allowed to enter the heat exchange element 200 so as to become the third airflow F3. Thus, it is possible to use just one third mixing flap 470 for combined control of the amount of airflow entering the heat exchange element 200 from the seventh space and the amount of the third bypass airflow BF3.

Optionally, the heating, ventilation and/or air conditioning device 10 may further comprise a fourth mixing flap 490 located in the eighth space, the fourth mixing flap 490 being similarly configured to generate a fourth bypass airflow BF4 or an adjustable amount of a fourth bypass airflow BF4, so as to realize more diverse regulation modes. More specifically, the housing 100 of the heating, ventilation and/or air conditioning device 10 may comprise a fourth bypass airflow channel port BP4 defined between the housing 100 and a second end edge opposite the first end edge of the heat exchange element 200; the fourth mixing flap 490 is configured to be able to control the opening or closing of the fourth bypass airflow channel port BP4 and the degree of opening thereof. In addition, similarly to the third mixing flap 480, the fourth mixing flap may also be configured to simultaneously be able to control whether there is any airflow passing through the heat exchange element 200 to reach the sixth space, i.e. any fourth airflow F4, or the amount thereof. Alternatively, another separate flap could also be provided for controlling whether there is any airflow passing through the heat exchange element 200 to reach the sixth space, i.e. any fourth airflow F4, or the amount thereof. More specifically, the fourth mixing flap 490 and the optional other separate flap are arranged in the eighth space.

Various operating modes of the heating, ventilation and/or air conditioning device 10 when the second main flap 470 is respectively located at the first flap position, the intermediate flap position and the second flap position are described below.
(A) Second main flap 470 at first flap position, i.e. second main flap 470 closing fourth channel port P4 and opening fifth channel port P5.

As shown in Fig. 5, at this time, airflow in the fifth space cannot flow through the fourth channel port P4, and thus cannot flow toward the third outlet 450; correspondingly, airflow in the sixth space cannot flow through the fourth channel port P4, and thus cannot flow toward the front feet-blowing outlet 464. That is, the closure of the fourth channel port P4 isolates the fifth space and the sixth space from one another, and thus isolates airflow in the fifth space from airflow in the sixth space. In addition, at this time, the fifth channel port P5 is open, so the front feet-blowing outlet 464 is open. This allows warming of the front feet to be accelerated, and enables fully independent control of front feet-blowing and front face-blowing and/ defrosting.

At this time, it is possible to implement a front feet-blowing mode, a front face-blowing and front feet-blowing mode, a defrosting and front feet-blowing mode, a front face-blowing and defrosting and front feet-blowing mode, a demisting and front feet-blowing mode, etc.

When implementing the front feet-blowing mode, the position of the third mixing flap 480 can be adjusted according to actual needs, so as to enable a desired amount of third airflow F3 and/or third bypass airflow BF3 to flow toward the front feet-blowing outlet 464. At the same time, the second front face-blowing flap 453 and/or the second defrosting flap 454 can also be put in a position that fully closes the second front face-blowing outlet 451 and/or the second defrosting outlet 452.

When implementing the front face-blowing and front feet-blowing mode, the position of the third mixing flap 480 can be adjusted according to actual needs, so as to enable a desired amount of third airflow F3 and/or third bypass airflow BF3 to flow toward the front feet-blowing outlet 464. In addition, the second front face-blowing flap 453 can be put in a position that fully or partly opens the second front face-blowing outlet 451, and the second defrosting flap 454 can be put in a position that fully or partly opens the second defrosting outlet 452; at the same time, the position of the fourth mixing flap 490 can also be adjusted according to actual needs, to enable a desired amount of fourth airflow F4 and/or fourth bypass airflow BF4 to flow toward the front face-blowing outlet.

When implementing the defrosting and front feet-blowing mode, the position of the third mixing flap 480 can be adjusted according to actual needs, so as to enable a desired amount of third airflow F3 and/or third bypass airflow BF3 to flow toward the front feet-blowing outlet 464. In addition, the second front defrosting flap 454 can be put in a position that opens the second defrosting outlet 452, and the second front face-blowing flap 453 can be put in a position that fully closes the second front face-blowing outlet 451; at the same time, the fourth mixing flap 490 can also be put in a position that fully closes the fourth bypass airflow channel port BP4, so as to complete a defrosting operation in the shortest time.

When implementing the front face-blowing and defrosting and front feet-blowing mode, the position of the third mixing flap 480 can be adjusted according to actual needs, so as to enable a desired amount of third airflow F3 and/or third bypass airflow BF3 to flow toward the front feet-blowing outlet 464. In addition, the second front face-blowing flap 453 can be put in a position that fully or partly opens the second front face-blowing outlet 451, and the second front defrosting flap 454 can be put in a position that opens the second defrosting outlet 452; at the same time, the fourth mixing flap 490 can also be put in a position that fully closes the fourth bypass airflow channel port BP4, so as to complete a defrosting operation in the shortest time.

When implementing the demisting and front feet-blowing mode, the position of the third mixing flap 480 can be adjusted according to actual needs, so as to enable a desired amount of third airflow F3 and/or third bypass airflow BF3 to flow toward the front feet-blowing outlet 464. In addition, the second front defrosting flap 454 can be put in a position that opens the second defrosting outlet 452, and the second front face-blowing flap 453 can be put in a position that fully closes the second front face-blowing outlet 451; at the same time, the fourth mixing flap 490 can also be put in a position that fully or partly the fourth bypass airflow channel port BP4.

(B) Second main flap 470 at intermediate flap position, i.e. second main flap 470 partly opening fourth channel port P4 and fifth channel port P5 simultaneously.

As shown in Fig. 7, at this time, the fifth channel port P5 is partly open, so the front feet-blowing outlet 464 is also partly open.

In addition, at this time, the fourth channel port P4 is partly open, such that the fourth airflow F4 in the sixth space can enter the fifth space through the fourth channel port P4, pass through the fifth channel port P5, and thus enter the front feet-blowing outlet 464. This allows warming of the front feet to be accelerated without the risk of misting up.

At this time, through regulating control of the various flaps, it is possible to implement a front feet-blowing mode, a front face-blowing and front feet-blowing mode, a defrosting and front feet-blowing mode, a front face-blowing and defrosting and feet-blowing mode, a demisting and front feet-blowing mode, a front face-blowing and demisting and front feet-blowing mode, etc.

(C) Second main flap 470 at second flap position, as shown in Fig. 6, i.e. second main flap 470 opening fourth channel port P4 and closing fifth channel port P5. The third airflow F3 is guided by the second main flap 470 to flow toward the third outlet 450 through the fourth channel port P4, neither the third airflow F3 nor the fourth airflow F4 is able to flow through the fifth channel port P5, and more specifically, the fourth airflow F4 can also flow toward the third outlet 450.

As stated above, the fifth channel port P5 may be configured as a channel port leading to the front feet-blowing outlet 464, so at this time, the front feet-blowing outlet 464 is also closed, so no airflow is able to flow out through the front feet-blowing outlet 464.

At this time, through regulating control of the various flaps, it is possible to implement an all-defrosting mode, a front face-blowing mode, a front face-blowing and defrosting mode, a front face-blowing and demisting mode, etc.

The heating, ventilation and/or air conditioning device 10 comprises a drive assembly. The drive assembly is installed on the housing 100, and is configured to be able to drive the first main flap 170 to rotate.

The drive assembly comprises a cam, which is configured to drive the rear face-blowing flap 163, the rear feet-blowing flap 164 and the first main flap 170 to rotate. The cam has multiple grooves, which are used to drive the rear face-blowing flap 163, the rear feet-blowing flap 164 and the first main flap 170 to rotate, thus enabling the heating, ventilation and/or air conditioning device 10 to have multiple operating modes.

Depending on actual demands, the first main flap 170 has different positions in a ventilation mode, and there are multiple modes in rear mode control logic, comprising: an all-cold ventilation mode, a hybrid ventilation mode, a double layer flow mode, a feet-blowing mode, a feet-blowing and defrosting mode, a defrosting mode (a mode in which airflow to the rear is switched off), a ventilation and defrosting mode and a fully-on mode.

The positions of the rear face-blowing flap 163 and the rear feet-blowing flap 164 in one mode might be the same as in another mode; for example, the feet-blowing mode and the feet-blowing and defrosting mode, the hybrid ventilation mode and the ventilation and defrosting mode, the double layer flow mode and the fully-on mode.

In the present invention, control logic for airflow to the rear is as follows: all-cold ventilation mode => hybrid ventilation mode => ventilation and defrosting mode => double layer flow mode => fully-on mode => feet-blowing mode/feet-blowing and defrosting mode => defrosting mode (mode in which airflow to the rear is switched off). The order of these modes may vary according to air distribution requirements, but the all-cold ventilation mode needs to be adjacent to the hybrid ventilation mode.

Demonstrative embodiments of the heating, ventilation and air conditioning device proposed in the present invention have been described in detail above with reference to preferred embodiments. However, those skilled in the art will understand that without departing from the concept of the present invention, various modifications and alterations may be made to the specific embodiments above, and various technical features and structures proposed in the present invention may be combined in various ways, without exceeding the scope of protection of the present invention.

The scope of the present disclosure is not defined by the embodiments described above, but by the appended claims and their equivalent scope.

### List of reference numerals

10 heating, ventilation and/or air conditioning device
100 housing
100a first housing plate
100b first peripheral housing portion
110 first wall
120 second wall
130 first intermediate wall
P1 first channel port
P2 second channel port
P3 third channel port
140 first dividing wall
150 first outlet
151 first front face-blowing outlet
152 first defrosting outlet
153 first front face-blowing flap
154 first defrosting flap
160 second outlet
161 rear face-blowing outlet
162 rear feet-blowing outlet
163 rear face-blowing flap
164 rear feet-blowing flap
170 first main flap
X1 first rotation axis
171 first end
172 second end
173 first valve flap
174 second valve flap
180 first mixing flap
BP1 first bypass airflow channel port
BF1 first bypass airflow
190 second mixing flap
BP2 second bypass airflow channel port
BF2 second bypass airflow
200 heat exchange element
F1 first airflow
F2 second airflow
300 evaporator
100c third housing plate
100d second peripheral housing portion
410 third wall
420 fourth wall
430 second intermediate wall
440 second dividing wall
P4 fourth channel port
P5 fifth channel port
470 second main flap
471 first abutting end
472 second abutting end
475 middle part
X2 second rotation axis
473 third valve flap
474 fourth valve flap
F3 third airflow
F4 fourth airflow
464 front feet-blowing outlet
450 third outlet
451 second front face-blowing outlet
452 second defrosting outlet
453 second front face-blowing flap
454 second defrosting flap
480 third mixing flap
BF3 third bypass airflow
BP3 third bypass airflow channel port
490 fourth mixing flap
BF4 fourth bypass airflow
BP4 fourth bypass airflow channel port

## Claims

1. A heating, ventilation and/or air conditioning device (10) for a vehicle, comprising:
a housing (100), allowing passage of an airflow; the housing (100) having a first wall (110), a second wall (120) and a first intermediate wall (130); the first wall (110) and the first intermediate wall (130) defining a first channel port (P1) in the housing (100); the second wall (120) and the first intermediate wall (130) defining a second channel port (P2) in the housing (100);
a first main flap (170), having a first position, a second position, and an intermediate position between the first position and the second position in the housing (100), wherein:
at the first position, the first main flap (170) closes the second channel port (P2) and opens the first channel port (P1);
at the intermediate position, the first main flap (170) opens the first channel port (P1) and the second channel port (P2);
at the second position, the first main flap (170) closes the first channel port (P1) and opens the second channel port (P2).

2. The heating, ventilation and/or air conditioning device (10) as claimed in claim 1, **characterized in that** the first main flap (170) has a first end (171) and a second end (172);
at the first position, the first end (171) abuts the first intermediate wall (130), and the second end (172) abuts the second wall (120), so that the first main flap (170) closes the second channel port (P2) and opens the first channel port (P1);
at the intermediate position, the first end (171) is located between the first wall (110) and the first intermediate wall (130), and the second end (172) is located between the second wall (120) and the first intermediate wall (130), so that the main flap (170) opens the first channel port (P1) and the second channel port (P2);
at the second position, the first end (171) abuts the first wall (110), and the second end (172) abuts the first intermediate wall (130), so that the main flap (170) closes the first channel port (P1) and opens the second channel port (P2).

3. The heating, ventilation and/or air conditioning device (10) as claimed in claim 1, **characterized in that** the first main flap (170) is arranged in the housing (100) in such a way as to be rotatable about a first rotation axis (X1).

4. The heating, ventilation and/or air conditioning device (10) as claimed in claim 1, **characterized in that** the heating, ventilation and/or air conditioning device (10) further comprises a heat exchange element (200);
the heat exchange element (200) is located in the housing (100); the first wall (110) is used to divide an airflow passing through the heat exchange element (200) into a first airflow (F1) and a second airflow (F2);
when the first main flap (170) is at the first position, the first channel port (P1) allows the first airflow (F1) to pass through;
when the first main flap (170) is at the second position, the second channel port (P2) allows the first airflow (F1) to pass through.

5. The heating, ventilation and/or air conditioning device (10) as claimed in claim 4, **characterized in that** the first wall (110) and the second wall (120) define a third channel port (P3) in the housing (100);
the third channel port (P3) allows the first airflow (F1) to pass through, wherein the third channel port (P3) is located upstream of the first channel port (P1) and the second channel port (P2) in the direction of flow of the first airflow (F1).

6. The heating, ventilation and/or air conditioning device (10) as claimed in claim 5, **characterized in that** the first wall (110) and the second wall (120) both extend from a downstream surface of the heat exchange element (200) in a direction away from the heat exchange element (200).

7. The heating, ventilation and/or air conditioning device (10) as claimed in claim 5, **characterized in that** the housing (100) has a first outlet (150) and a second outlet (160);
when the first main flap (170) is at the first position, the first airflow (F1) passing through the first channel port (P1) flows toward the first outlet (150);
when the first main flap (170) is at the intermediate position, the second outlet (160) is closed, such that the first airflow (F1) passing through the first channel port (P1) flows toward the first outlet (150);
when the first main flap (170) is at the second position, the first airflow (F1) passing through the second channel port (P2) flows toward the second outlet (160).

8. The heating, ventilation and/or air conditioning device (10) as claimed in claim 6, **characterized in that** the heating, ventilation and/or air conditioning device (10) further comprises a first mixing flap (180), the first mixing flap (180) being arranged upstream of the heat exchange element (200), and used to generate a first bypass airflow (BF1) that bypasses the heat exchange element (200).

9. The heating, ventilation and/or air conditioning device (10) as claimed in claim 8, **characterized in that** the heating, ventilation and/or air conditioning device (10) further comprises an evaporator (300) located upstream of the heat exchange element (200), and a first dividing wall (140) is provided between the evaporator (300) and the heat exchange element (200); the first dividing wall (140) is used to divide a space between the evaporator (300) and the heat exchange element (200);
the first mixing flap (180) is located at one side of the first dividing wall (140).

10. The heating, ventilation and/or air conditioning device (10) as claimed in claim 7, **characterized in that**
the first outlet (150) is a first front face-blowing outlet (151) and/or a first defrosting outlet (152);
the second outlet (160) is a rear face-blowing outlet (161) and/or a rear feet-blowing outlet (162).

11. The heating, ventilation and/or air conditioning device (10) as claimed in claim 1, **characterized in that** the heating, ventilation and/or air conditioning device (10) further comprises a second main flap (470) located in the housing (100); the housing (100) also has a third wall (410), a fourth wall (420) and a second intermediate wall (430), wherein the third wall (410) and the second intermediate wall (130) are configured to define a fourth channel port (P4) in the housing (100), and the fourth wall (420) and the second intermediate wall (430) are configured to define a fifth channel port (P5) in the housing (100);
the second main flap (470) is configured to be able to have a first flap position, a second flap position, and an intermediate flap position between the first flap position and the second flap position in the housing (100), wherein:
at the first flap position, the second main flap (470) closes the fourth channel port (P4) and opens the fifth channel port (P5);
at the intermediate flap position, the second main flap (470) opens the fourth channel port (P4) and the fifth channel port (P5);
at the second flap position, the second main flap (470) opens the fourth channel port (P4) and closes the fifth channel port (P5).
